# EUROPEAN PATENT APPLICATION

(11) **EP 4 230 852 A1**
(43) Date of publication of application: **23.08.2023**
(21) Application number: 23155732.3
(22) Date of filing: 09.02.2023
(51) Int. Cl.: F02B 29/04, F01P 3/02, F01P 3/20, F02M 35/10, F02M 35/112, F02M 35/16

(54) **ENGINE**

(30) Priority: 18.02.2022 JP 2022023515
(71) Applicant: Yanmar Holdings Co., Ltd., Osaka-shi, Osaka (JP)
(72) Inventor: FUKUDA, Yasushi, Kita-ku Osaka (JP); KUWAYAMA, Wataru, Kita-ku Osaka (JP); KITSUNEZUKA, Hisaki, Kita-ku Osaka (JP); NISHINO, Masato, Kita-ku Osaka (JP)
(74) Representative: Dennemeyer & Associates S.A.

(57) **Abstract**

[Problem] To provide an engine compact as well as capable of suppressing air supply efficiency from decreasing.

[Solution] The engine includes a cylinder head provided over a cylinder row, an intercooler provided on one end side of the cylinder head in a row direction of the cylinder row, an air supply manifold to introduce air from the intercooler to the cylinder head, and a cooling piping connected to the intercooler, wherein the cylinder head, air supply manifold, and cooling piping are arranged in a width direction intersecting the row direction of the cylinder row in stated order of the cylinder head, air supply manifold, and cooling piping, and in a cross section of the air supply manifold taken along a line intersecting the row direction, a length along the width direction is shorter than a length along a direction intersecting both the row direction and the width direction.

## Description

### TECHNICAL FIELD

The present disclosure relates to an engine.

### BACKGROUND ART

Intercoolers are known to cool the supply air compressed by a turbocharger. As an example of the arrangement of an air supply path including the intercooler, the engine described in Patent Literature 1 has the intercooler located on one end side of the engine in a crankshaft direction, an air supply manifold located on one side of a direction intersecting the crankshaft direction, and a cooling piping connected to the intercooler to be located along the crankshaft direction.

### PRIOR ART DOCUMENT

### PATENT DOCUMENT

Patent Literature 1: International Publication No. 2015/064449

### SUMMARY OF INVENTION

### TECHNICAL PROBLEM

In the engine described in Patent Literature 1, since the air supply manifold is located between a cylinder head and the cooling piping, there is a need to reduce the dimension of the air supply manifold in the direction intersecting the crankshaft in order to suppress the width of the engine in a direction intersecting the crankshaft. However, simply reducing the dimension of the air supply manifold leads a decrease of an air supply efficiency.

Considering the above circumstances, an object of the present disclosure is to provide an engine which is compact as well as capable of suppressing air supply efficiency from decreasing.

### SOLUTION TO PROBLEM

To solve the above mentioned problem, an engine according to the present disclosure includes a cylinder head provided over a cylinder row in which a plurality of cylinders lie in a row, an intercooler provided on one end side of the cylinder head in a row direction of the cylinder row, an air supply manifold to introduce air from the intercooler to the cylinder head, and a cooling piping connected to the intercooler, wherein the cylinder head, the air supply manifold, and the cooling piping are arranged in a width direction intersecting the row direction of the cylinder row in stated order of the cylinder head, the air supply manifold, and the cooling piping, and in a cross section of the air supply manifold that is taken along a line intersecting the row direction, a length along the width direction is shorter than a length along a direction intersecting both the row direction and the width direction.

The intercooler may include an air supply outlet to discharge air supply to the air supply manifold and a liquid outlet to discharge liquid to the cooling piping, and the air supply outlet and the liquid outlet may be respectively located at positions shifted from a center of the intercooler to one end of the intercooler in the width direction.

The air supply manifold may include an air supply path to discharge supply air to the cylinder head, and in a cross section of the air supply manifold taken along a line intersecting the row direction, the air supply path may be located at a position shifted from a center of the air supply manifold in a direction intersecting both the row direction and the width direction to one end of the air supply manifold in the intersecting direction.

The engine may further include a fresh water cooler provided on the other end side of the cylinder head in the row direction, wherein the cooling piping may be connected to both the intercooler and the fresh water cooler.

The cooling piping may be supported by the air supply manifold.

### ADVANTAGEOUS EFFECTS OF INVENTION

According to the present disclosure, the engine, which is compact as well as capable of suppressing air supply efficiency from decreasing, can be provided.

### BRIEF DESCRIPTION OF DRAWINGS

FIG. 1 is a perspective view illustrating an engine according to an embodiment of the present disclosure,
FIG. 2 is a perspective view illustrating air supply and exhaust paths according to an embodiment of the present disclosure,
FIG. 3 is a perspective view illustrating air supply and exhaust paths according to an embodiment of the present disclosure,
FIG. 4 is a perspective view illustrating a cooling piping according to an embodiment of the present disclosure,
FIG. 5 is a perspective view illustrating an intercooler side lid according to an embodiment of the present disclosure,
FIG. 6 is a perspective view illustrating a fresh water cooler side lid according to an embodiment of the present disclosure,
FIG. 7 is a perspective view illustrating a main part of the cooling piping according to an embodiment of the present disclosure,
FIG. 8 is an exploded view illustrating a main part of the cooling piping according to an embodiment of the present disclosure,
FIG. 9 is a side view illustrating a main part of the cooling piping according to an embodiment of the present disclosure,
FIG. 10 is a perspective view illustrating an air supply manifold according to an embodiment of the present disclosure,
FIG. 11 is a perspective view illustrating an air supply manifold according to an embodiment of the present disclosure,
FIG. 12 is a perspective view illustrating a cylinder head, an air supply manifold and a cooling piping according to an embodiment of the present disclosure, and
FIG. 13 is a plan view illustrating an engine according to an embodiment of the present disclosure.

### DESCRIPTION OF EMBODIMENTS

Now, an engine 100 according to an embodiment of the present disclosure will be described below with reference to the drawings.

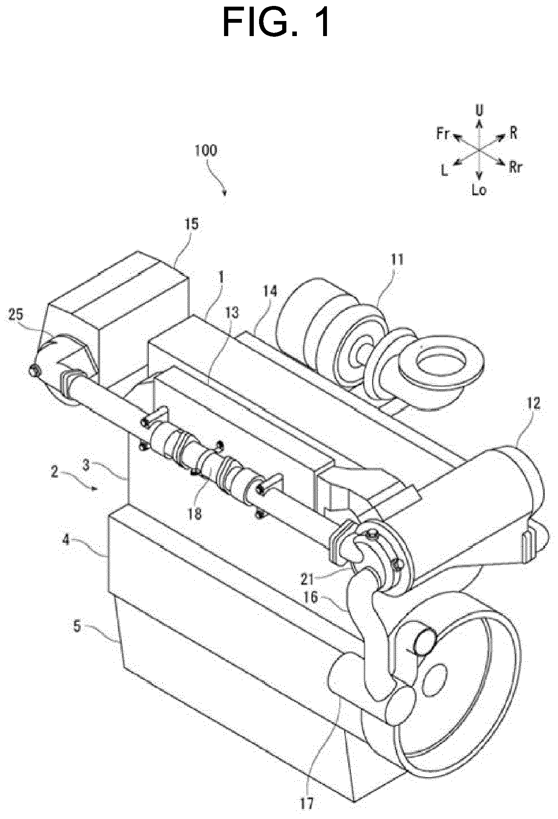

First, the overall configuration of the engine 100 is described. FIG. 1 is a perspective view illustrating the engine 100. In each of drawings, U, Lo, L, R, Fr, and Rr indicate up, down, left, right, front, and rear, respectively. For convenience, the present embodiment shows an example in which a cylinder head 1 is positioned above a cylinder block 2, but the engine 100 may be used in any posture. In addition, although a six-cylinder in-line diesel engine is shown as an example of the application of the present disclosure, the present disclosure is suitable for all reciprocating engines with multiple cylinders.

The engine 100 has a cylinder head 1, a cylinder block 2, and an oil pan 5.
The cylinder head 1 consists of six sets of component groups (not shown) arranged in series along the front-rear direction, each of which includes air supply paths, exhaust paths, air supply valves, exhaust valves, and injectors. The cylinder block 2 is equipped with a cylinder row 3, in which six cylinders (not shown) accommodating pistons and connecting rods are arranged in series along the front-rear direction, and a crankcase 4 housing a crankshaft (not shown). The oil pan 5 stores a lubricating oil.

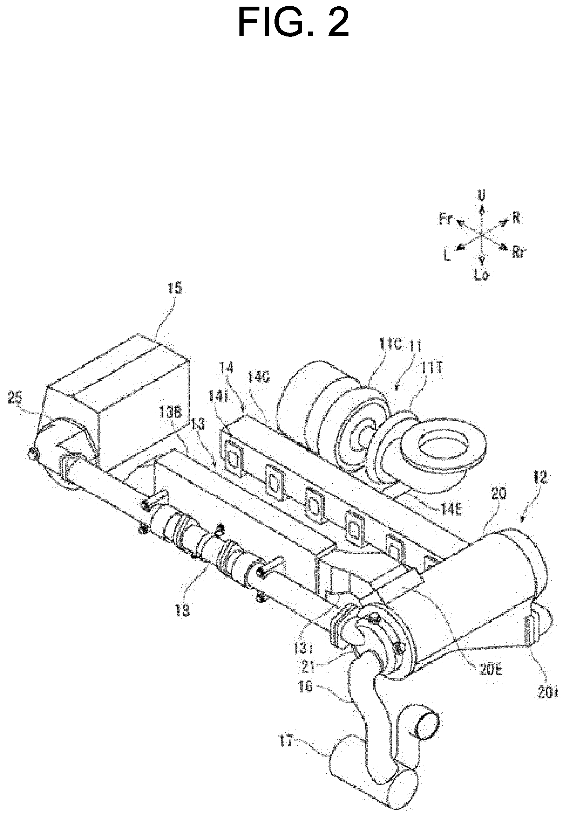

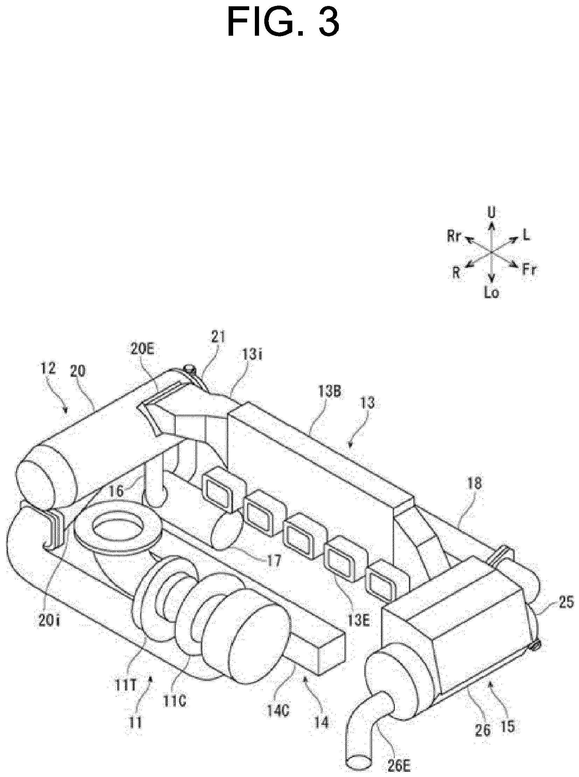

Next, air supply and exhaust paths are described. FIGS. 2 and 3 show the air supply and exhaust paths. The air supply and exhaust path includes a turbocharger 11,an intercooler 12, an air supply manifold 13, a cylinder head 1, and an exhaust manifold 14.

The turbocharger 11 is equipped with a turbine 11T and a compressor 11C. The compressor 11C is connected to the intercooler 12. The air supply manifold 13 has a body 13B, an air supply intake 13i, and six air supply paths 13E. The air supply intake 13i is connected to the intercooler 12. The six air supply paths 13E are connected to the air supply paths of the cylinder head 1 (not shown). The exhaust manifold 14 has a collector 14C, six exhaust intakes 14i, and an exhaust outlet 14E. The six exhaust intakes 14i are connected to the exhaust path of the cylinder head 1 (not shown). The exhaust outlet 14E is connected to the turbine 1 1T.

Exhaust from the cylinders is fed to the turbine 11T through the exhaust path of the cylinder head 1 and the exhaust manifold 14. The turbine 11T is rotated by exhaust energy. The compressor 11C compresses air by rotating together with the turbine 11T to take in air. Compressed air is sent to the intercooler 12. The intercooler 12 cools the compressed air and sends it to the air supply manifold 13. The air supply manifold 13 has a function of a surge tank that equalizes the density, air supply volume, and airflow of the compressed air supplied to each cylinder, and supplies the compressed air to the air supply paths of the cylinder head 1 via the air supply path 13E.

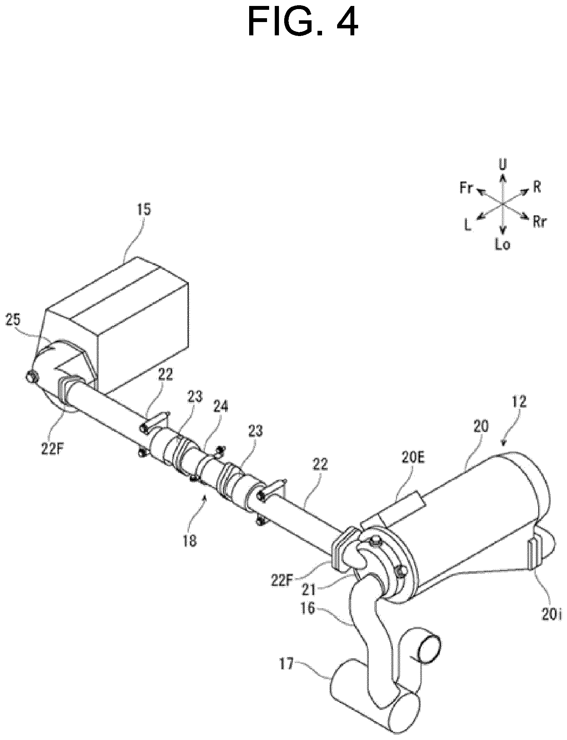

Newt, an overview of the cooling piping 18 is described. FIG. 4 shows a perspective view of the cooling piping 18. A water supply pipe 16 with a pump 17 is connected to the intercooler 12. The intercooler 12 cools the air supply with seawater drawn up by the pump 17. The intercooler 12 is connected to a fresh water cooler 15 via the cooling piping 18. The seawater used to cool the air supply in the intercooler 12 is fed through the cooling piping 18 to the fresh water cooler 15.
The fresh water cooler 15 cools a coolant circulating in a water jacket (not shown) in the engine 100 using seawater supplied from the intercooler 12. The seawater used to cool the coolant in the fresh water cooler 15 is discharged overboard after being used to cool the lubricating oil in the oil cooler (not shown).

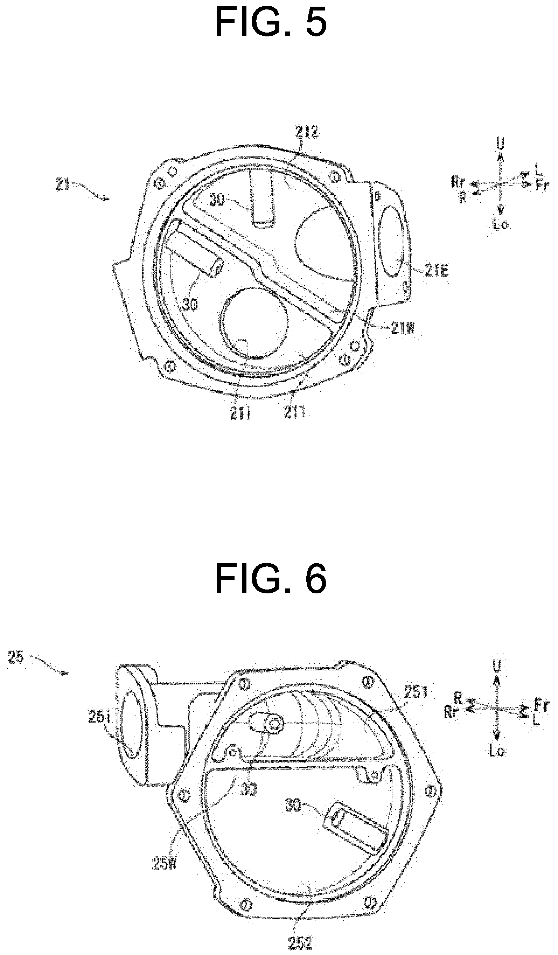

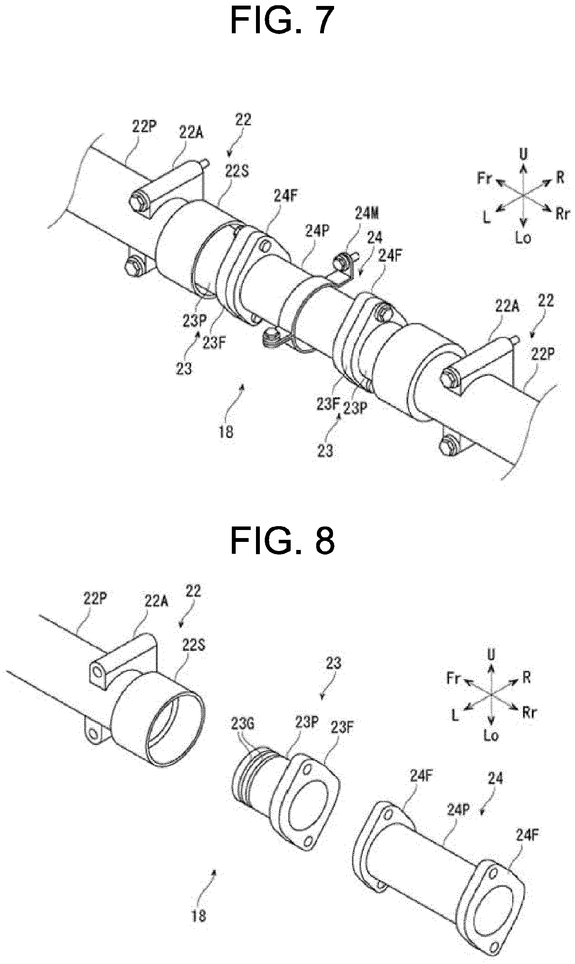

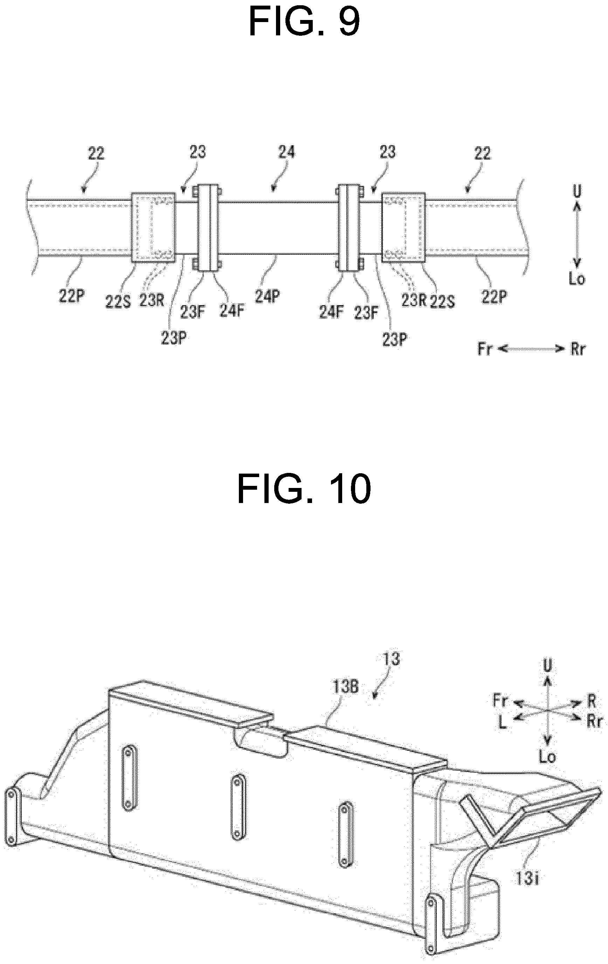

Next, the cooling piping 18 is described in detail. FIG. 5 is a perspective view showing an intercooler side lid 21. FIG. 6 is a perspective view showing the fresh water cooler side lid 25. FIG. 7 is a perspective view showing the main part of the cooling piping 18. FIG. 8 is an exploded view showing a main part of the cooling piping 18. FIG. 9 is a side view showing the main part of the cooling piping 18. In FIG. 7, a piping for connection 23 and a metal piping 22 are provided in front and the rear of a sacrificial corrosion-resistant coated piping 24, but FIG. 8 shows only the sacrificial corrosion-resistant coated piping 24 and the piping for connection 23 and metal piping 22 in front of the same are shown.

The intercooler 12 (see FIGS. 4 and 5) has an intercooler housing 20 and an intercooler side lid 21 (an example of a flow path component) which closes an opening (not shown) provided on the left side of the intercooler housing 20.

The intercooler housing 20 has an air supply intake 20i and an air supply outlet 20E. The air supply intake 20i is located on the right side of the bottom of the intercooler housing 20. The air supply outlet 20E is located on a position shifted from a center C1 of the intercooler housing 20 to the left side in the left-right direction. The air supply outlet 20E opens forward and upward.

The intercooler side lid 21 is generally circular and recessed to the left. A space inside the intercooler side lid 21 is divided into a lower first sub-chamber 211 and an upper second sub-chamber 212 by a bulkhead 21W. The first sub-chamber 211 has a liquid intake 21i passing through in the left-right direction. A water supply pipe 16 is connected to the liquid intake 21i. The second sub-chamber 212 has a liquid outlet 21E passing through in the front-rear direction. The rear end of the cooling piping 18 is connected to the liquid outlet 21E. The first and second sub-chambers 211 and 212 are provided with insertion holes (not shown) passing through the chamber's walls. The insertion hole is female threaded. A bolt-shaped sacrificial corrosion-resistant member 30, which is male threaded, is attached to the hole. The sacrificial corrosion-resistant member 30 protrudes from the inner surfaces of the first and second sub-chambers 211 and 212. The sacrificial corrosion-resistant member 30 is formed of zinc or iron. Zinc is mainly made from high-purity zinc ingots with a purity of 99.99% or higher. Iron with a purity of 99.90% or higher is used.

The fresh water cooler 15 (see FIGS. 4 and 6) has a fresh water cooler housing 26 and a fresh water cooler side lid 25 (an example of a flow path component) that closes an opening (not shown) provided on the left end of the fresh water cooler housing 26. The fresh water cooler side lid 25 is generally circular and recessed to the left. The space inside the fresh water cooler side lid 25 is divided into an upper first sub-chamber 251 and a lower second sub-chamber 252 by a bulkhead 25W. The first sub-chamber 251 has a liquid intake 25i passing through in the front-rear direction. The front end of the cooling piping 18 is connected to the liquid intake 25i. The first and second sub-chambers 251 and 252 are provided with insertion holes (not shown) passing through the chamber's walls. The insertion hole is female threaded. The aforementioned sacrificial corrosion-resistant member 30 is attached to the insertion hole. The sacrificial corrosion-resistant member 30 protrudes from the inner surfaces of the first and second sub-chambers 251 and 252.

The cooling piping 18 (see FIGS. 4, 7 and 9) includes the metal piping 22 and the sacrificial corrosion-resistant coated piping 24. Seawater flows from the intercooler 12 to the fresh water cooler 15 through the cooling piping 18. The metal piping 22, the sacrificial corrosion-resistant coated piping 24, the intercooler side lid 21, and the fresh water cooler side lid 25 are arranged from the rear side in stated order of the intercooler side lid 21, the metal piping 22, the sacrificial corrosion-resistant coated piping 24, the metal piping 22, and the fresh water cooler side lid 25.

The metal piping 22 is made of iron. No sacrificial corrosion-resistant coating is formed on the inner surface of the metal piping 22. The metal piping 22 in front and the rear of the sacrificial corrosion-resistant coated piping 24 has the same shape. Specifically, the piping is configured to be mutually interchangeable as a cooling water piping so that the piping has at least both ends with the same shape and the same pipe length. Even if the shape and arrangement of bosses formed on the piping surface are different, they are deemed as the same shape if they are interchangeable as cooling water piping. The metal piping 22 has a pipe section 22P, a flange 22F at one end of the pipe section 22P in the front-rear direction, and a sleeve 22S at the other end of the pipe section 22P. The inner diameter of the sleeve 22S is larger than the inner diameter of the pipe section 22P. On the intercooler 12 side, the flange 22F is fastened to the liquid outlet 21E of the intercooler side lid 21 via a gasket or O-ring with bolts (all omitted).
On the fresh water cooler 15 side, the flange 22F is fastened to the liquid intake 25i of the fresh water cooler side lid 25 via a gasket or O-ring with bolts (all omitted).

A bolt insertion portion 22A is provided in the vicinity of the end of the sleeve 22S side of the pipe section 22P of the metal piping 22 (see FIGS. 7 and 8). The bolt insertion portion 22A is a portion expanding upward and downward from the outer peripheral surface of the pipe section 22P. The bolt insertion portion 22A has a bolt hole passing through in the left-right direction. The left side of the body 13B of the air supply manifold 13 has a female thread (not shown) at a position corresponding to the bolt hole in the bolt insertion portion 22A. By fastening the metal piping 22 to the air supply manifold 13 using bolts, the metal piping 22 is secured to the air supply manifold 13 (see FIG. 2).

The sacrificial corrosion-resistant coated piping 24 is made of iron. The sacrificial corrosion-resistant coated piping 24 has a pipe section 24P and flanges 24F provided at both ends of the pipe section 24P. The inner surface of the sacrificial corrosion-resistant coated piping 24 is galvanized, such as hot-dip galvanized or electrogalvanized. Zinc is mainly made from high-purity zinc ingots with a purity of 99.99% or higher.

The metal piping 22 and the sacrificial corrosion-resistant coated piping 24 are connected using the piping for connection 23. The piping for connection 23 has a pipe section 23P and a flange 23F provided at one end of the pipe section 23P in the front-rear direction. The outer peripheral surface of the other end side of the pipe section 23P has a groove 23G along the circumference where the O-ring 23R (see FIG. 9) fits. When the other end of the piping for connection 23 is inserted into the sleeve 22S of the metal piping 22, the O-ring 23R is pressed against the inner surface of the sleeve 22S to prevent seawater from leaking. The piping for connection 23 can slide along the inner surface of the sleeve 22S in the front-rear direction. The flange 23F of the piping for connection 23 is fastened to the flange 24F of the sacrificial corrosion-resistant coated piping 24 via a gasket or O-ring with bolts (all omitted).

The sacrificial corrosion-resistant coated piping 24 is secured to the air supply manifold 13 by a fixing member 24M (see FIGS. 2 and 7). The fixing member 24M is a metal band, for example. In the present example, the fixing member 24M is composed of two bands joined by bolts and nuts, but the fixing member 24M may be composed of a single band. The fixing member 24M is wrapped around the pipe section 24P of the sacrificial corrosion-resistant coated piping 24. The both ends of the fixing member 24M in the longitudinal direction are bent so as to be along the left side of the body 13B of the air supply manifold 13 and are provided with bolt holes passing through in the left-right direction. The left side of the body 13B of the air supply manifold 13 has female threads at positions corresponding to the bolt holes of the fixing member 24M (not shown). By fastening the sacrificial corrosion-resistant coated piping 24 to the air supply manifold 13 using bolts, the sacrificial corrosion-resistant coated piping 24 is secured to the air supply manifold 13.

Seawater flowing from the water supply pipe 16 into the first sub-chamber 211 through the liquid intake 21i of the intercooler side lid 21 cools the compressed air while flowing along the flow path in the intercooler housing 20 (not shown), and flows from the second sub-chamber 212 into the cooling piping 18 through the liquid outlet 21E. Seawater flowing from the cooling piping 18 into the first sub-chamber 251 through the liquid intake 25i of the fresh water cooler side lid 25 flows over the bulkhead 25W into the second sub-chamber 252, cools the coolant while flowing along the flow path in the fresh water cooler 15 (not shown), and is discharged overboard through the liquid outlet 26E and the oil cooler (not shown).

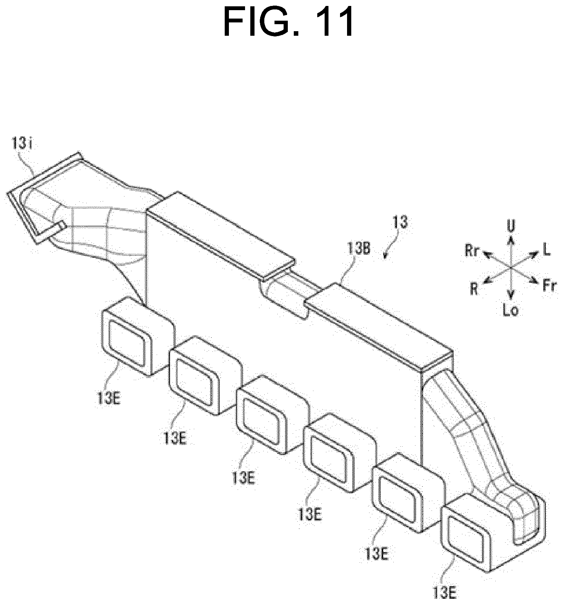

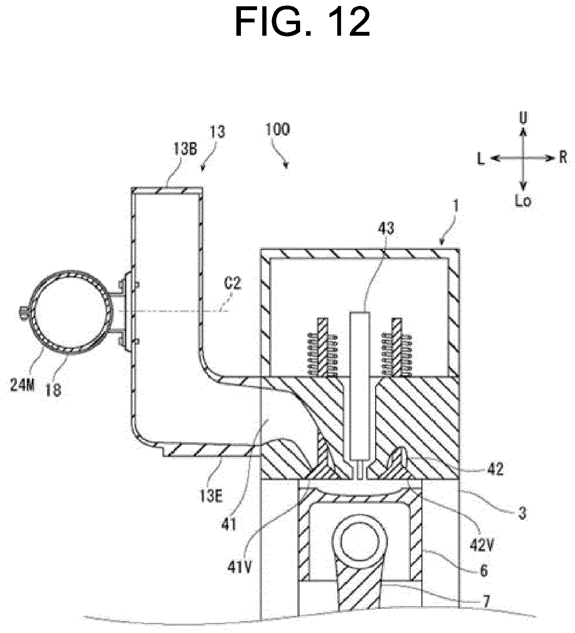

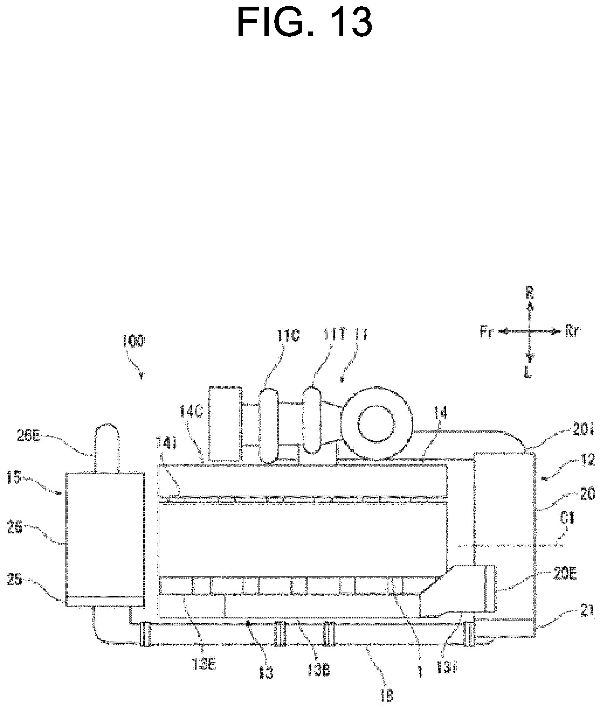

Next, the air supply manifold 13 is described in detail. FIGS. 10 and 11 is a perspective view showing the air supply manifold 13. FIG. 12 is a cross-sectional view showing the cylinder head 1, the air supply manifold 13, and the cooling piping 18. FIG. 13 is a plan view of the engine 100.

An engine 100 includes a cylinder head 1 provided over a cylinder row 3 in which a plurality of cylinders lie in a row, an intercooler 12 provided on one end side of the cylinder head 1 in a row direction of the cylinder row 3, an air supply manifold 13 to introduce air from the intercooler 12 to the cylinder head 1, and a cooling piping 18 connected to the intercooler 12, wherein the cylinder head 1, the air supply manifold 13, and the cooling piping 18 are arranged in a width direction intersecting the row direction of the cylinder row 3 in stated order of the cylinder head 1, the air supply manifold 13, and the cooling piping 18, and in a cross section of the air supply manifold 13 that is taken along a line intersecting the row direction, a length along the width direction is shorter than a length along a direction intersecting both the row direction and the width direction.

The air supply manifold 13 (see FIGS. 10 and 11) has the body 13B, the air supply intake 13I, and six air supply paths 13E. The body 13B is formed in a rectangular parallelopiped shape elongated in the front-rear direction, in which the top of the front end thereof is deformed as a forward-descending inclined plane. The interior of the body 13B is hollow. The cross-section of the body 13B (see FIG. 12) intersecting the front-rear direction (in a row direction of the cylinder row 3) has a rectangle shape elongated in the vertical direction. In other words, the length in the width direction of the cross section of the body 13B in the direction intersecting the row direction is shorter than the length in a direction intersecting the width direction (vertical direction). The rear end of the body 13B is provided with the air supply intake 13i protruding rearward. The air supply intake 13i is connected to the air supply outlet 20E of the intercooler 12.

The right side of the body 13B has six air supply paths 13E protruding toward the right, which are arranged in a row in the front-rear direction. The air supply paths 13E are located at positions shifted from the center C2 of the body 13B in the vertical direction to below (see FIG. 12). In other words, in the cross section taken along a line intersecting the row direction of the cylinder row 3, the air supply paths 13E are provided at positions shifted from the center C2 of the body 13B in a direction intersecting the width direction to one side (in the present embodiment, below). Therefore, the portion above the center C2 of the body 13B in the vertical direction functions as a surge tank that equalizes the density, air supply, and airflow of the compressed air to be supplied to each cylinder. The six air supply paths 13E are connected to the air supply paths of the cylinder head 1 (not shown).

The cylinder head 1, the air supply manifold 13, and the cooling piping 18 (see FIGS. 8 and 9) are arranged in the width direction intersecting the row direction of the cylinder row 3 in stated order of the cylinder head 1, the air supply manifold 13, and the cooling piping 18. The air supply outlet 20E and the liquid outlet 21E (see FIG. 9) provided with the intercooler 12 are located at positions shifted from the center C1 of the intercooler 12 in the width direction to one side (in the present embodiment, the left side).

According to the engine 100 of the present embodiment described above, the engine 100 includes a cylinder head 1 provided over a cylinder row 3 in which a plurality of cylinders lie in a row, an intercooler 12 provided on one end side of the cylinder head 1 in a row direction of the cylinder row 3, an air supply manifold 13 to introduce air from the intercooler 12 to the cylinder head 1, and a cooling piping 18 connected to the intercooler 12, wherein the cylinder head 1, the air supply manifold 13, and the cooling piping 18 are arranged in a width direction intersecting the row direction of the cylinder row 3 in stated order of the cylinder head 1, the air supply manifold 13, and the cooling piping 18, and in a cross section of the air supply manifold 13 that is taken along a line intersecting the row direction, a length along the width direction is shorter than a length along a direction intersecting both the row direction and the width direction. According to this configuration, the engine 100, which is compact as well as capable of suppressing air supply efficiency from decreasing, can be provided.

Furthermore, according to the engine 100 of the present embodiment, the intercooler 12 includes an air supply outlet 20E to discharge air supply to the air supply manifold 13; and a liquid outlet 21E to discharge liquid to the cooling piping 18, and the air supply outlet 20E and the liquid outlet 21E are respectively located at positions shifted from a center C1 of the intercooler 12 to one end of the intercooler 12 in the width direction. According to this configuration, the cylinder head 1, the air supply manifold 13, and the cooling piping 18 can be neatly and compactly arranged in the width direction.

Furthermore, according to the engine 100 of the present embodiment, the air supply manifold 13 includes an air supply path 13E to discharge supply air to the cylinder head 1, and in a cross section of the air supply manifold 13 taken along a line intersecting the row direction, the air supply path 13E is located at a position shifted from a center C2 of the air supply manifold 13 in a direction intersecting both the row direction and the width direction to one end of the air supply manifold 13. According to this configuration, the space on the side where the air supply path 13E is not provided among the two spaces bounded by the center C2 of the air supply manifold 13 in a direction intersecting the width direction functions as a surge tank, so the density, air supply volume and airflow of the compressed air to be supplied to each cylinder can be equalized.

Furthermore, the engine 100 of the present embodiment further includes a fresh water cooler 15 provided on the other end side of the cylinder head 1 in the row direction, wherein the cooling piping 18 is connected to both the intercooler 12 and the fresh water cooler 15. According to this configuration, the overall height or width of the engine 100 can be reduced compared to when the intercooler 12 or the fresh water cooler 15 is placed over the cylinder head 1 or on the side of the cylinder head 1 in the width direction.

Furthermore, according to the engine 100 of the present embodiment, the cooling piping 18 is supported by the air supply manifold 13. According to this configuration, it is possible to prevent the cooling piping 18 from being damaged by hitting the air supply manifold 13 due to vibration of the engine 100. Therefore, the cooling piping 18 and the air supply manifold 13 can be located closer to each other, thereby making the engine 100 more compact.

The above embodiment may be modified as follows.

In the above embodiment, seawater is shown as an example of a liquid flowing through the metal piping 22, but the liquid could be fresh water, tap water, etc. For example, the invention may be applied to a configuration in which an engine 100 for power generation grounded on land is cooled using fresh or tap water stored in a pit. The liquid may be anything other than water, and may be any substance that contains components that corrode the metal piping 22.

In the above embodiment, the intercooler 12, the fresh water cooler 15, and the oil cooler are shown as examples of devices connected to cooling piping 18, but any device connected to the cooling piping 18 can be used to cool engine components using liquid.

The above embodiment shows an example where the intercooler 12 is located behind the engine 100 and the fresh water cooler 15 is located in front of the engine 100, but the fresh water cooler 15 may be located behind the engine 100 and the intercooler 12 may be located in front of the engine 100. In the above embodiment, an example is shown where seawater is supplied from intercooler 12 to fresh water cooler 15, but seawater may also be supplied from fresh water cooler 15 to intercooler 12.

The above embodiment shows an example in which the air supply path 13E is provided below the center C2 of the body 13B in the vertical direction, but the air supply path 13E may be provided above the center C2 of the body 13B in the vertical direction. In this case, the portion of the body 13B below the center C2 in the vertical direction functions as a surge tank.

### REFERENCE SIGNS LIST

100 Engine
1 Cylinder head
3 Cylinder row
12 Intercooler
13 Air supply manifold
13E Air supply path
15 Fresh water cooler
18 Cooling piping
20E Air supply outlet
21E Liquid outlet
C1 Center of the intercooler in the width direction
C2 Center of the air supply manifold in a direction intersecting the width direction

## Claims

1. An engine comprising:
a cylinder head provided over a cylinder row in which a plurality of cylinders lie in a row;
an intercooler provided on one end side of the cylinder head in a row direction of the cylinder row;
an air supply manifold to introduce air from the intercooler to the cylinder head; and
a cooling piping connected to the intercooler,
wherein the cylinder head, the air supply manifold, and the cooling piping are arranged in a width direction intersecting the row direction of the cylinder row in stated order of the cylinder head, the air supply manifold, and the cooling piping, and
in a cross section of the air supply manifold that is taken along a line intersecting the row direction, a length along the width direction is shorter than a length along a direction intersecting both the row direction and the width direction.

2. The engine according to claim 1, wherein
the intercooler includes:
an air supply outlet to discharge air supply to the air supply manifold; and
a liquid outlet to discharge liquid to the cooling piping, and
the air supply outlet and the liquid outlet are respectively located at positions shifted from a center of the intercooler to one end of the intercooler in the width direction.

3. The engine according to claim 1 or 2, wherein
the air supply manifold includes an air supply path to discharge supply air to the cylinder head, and
in a cross section of the air supply manifold taken along a line intersecting the row direction, the air supply path is located at a position shifted from a center of the air supply manifold in a direction intersecting both the row direction and the width direction to one end of the air supply manifold in the intersecting direction.

4. The engine according to any one of claims 1 to 3 further comprising
a fresh water cooler provided on the other end side of the cylinder head in the row direction,
wherein the cooling piping is connected to both the intercooler and the fresh water cooler.

5. The engine according to any one of claims 1 to 4, wherein
the cooling piping is supported by the air supply manifold.
